# EUROPÄISCHE PATENTSCHRIFT

(11) **EP 0 763 441 B1**
(45) Veröffentlichungstag und Bekanntmachung des Hinweises auf die Patenterteilung: **13.10.1999**
(21) Anmeldenummer: 96109761.5
(22) Anmeldetag: 18.06.1996
(51) Int. Cl.: B60K 15/035

(54) **Vorrichtung zum Entlüften eines Kraftstoffbehälters eines Kraftfahrzeuges**
Venting arrangement for a fuel tank of a motor vehicle
Dispositif d'aération du réservoir de carburant d'un véhicule à moteur

(30) Priorität: 13.09.1995 DE 19533919
(43) Veröffentlichungstag der Anmeldung: 19.03.1997
(73) Patentinhaber: Bayerische Motoren Werke Aktiengesellschaft, 80788 München (DE)
(72) Erfinder: Klaffki, Heinz, 85716 Unterschleissheim (DE)

(56) Entgegenhaltungen:
- EP-A- 0 206 874
- DE-A- 4 121 323
- FR-A- 2 164 969

## Beschreibung

Die Erfindung betrifft eine Vorrichtung zum Entlüften eines Kraftstoffbehälters eines Kraftfahrzeuges gemäß den Merkmalen des Oberbegriffs des Anspruchs I

Es sind bereits Kraftstoffbehälter-Entlüftungssysteme bekannt, bei denen ein Ausgleichsbehälter für den Kraftstoff unterhalb des maximalen Kraftstoffbehälter-Befüllniveaus angeordnet ist. Dabei handelt es sich um Ausgleichsvolumen, die im Kraftstoffbehälter integriert und mit Ventilen ausgerüstet sind, die ein Befüllen des Ausgleichsvolumen beim Betankungsvorgang verhindern. Über diese Ventile wird auch die Be- und Entlüftung des Kraftstoffbehälters im Betriebszustand des Kraftfahrzeuges sichergestellt.

Aus der DE 41 21 323 A1 ist eine gattungsbildende Vorrichtung zum Entlüften eines Kraftstoffbehälters eines Kraftfahrzeuges bekannt, bei der ein vom Kraftstoffbehälter getrennter Ausgleichsbehälter unterhalb des maximalen Kraftstoff-Behälterniveaus angeordnet ist. Die Verbindung zwischen dem Ausgleichsbehälter und dem Kraftstoffbehälter wird dabei durch ein Schwimmerschwerkraftventil, das zwischen dem Kraftstoffbehälter und dem Ausgleichsbehälter angeordnet ist, hergestellt oder unterbrochen, so daß beim Befüllen des Kraftstoffbehälters der Schwimmer des Ventils aufschwimmt und dadurch die Verbindung zwischen dem Kraftstoffbehälter und dem Ausgleichsbehälter unterbricht. Dadurch wird ein Befüllen des Ausgleichsbehälters beim Betankungsvorgang verhindert.

Der Kraftstoff, der über eine Betriebs-Entlüftungsleitung in den Ausgleichsbehälter durch eine Volumenausdehnung des Kraftstoffes bei Wärmeeinwirkung gelangen kann, fließt erst dann wieder in den Kraftstoffbehälter zurück, wenn die Verbindung zwischen dem Kraftstoffbehälter und dem Ausgleichsbehälter nicht mehr unterbrochen ist. Dies ist dann der Fall, wenn während des Fahrbetriebs das Kraftstoffniveau im Kraftstoffbehälter abfällt, wodurch der Schwimmer im Ventil sinkt und dadurch die Verbindung zwischen dem Kraftstoffbehälter und dem Ausgleichsbehälter wieder hergestellt wird.

Dieses bekannte Entlüftungssystem baut jedoch aufgrund der Verwendung eines Schwimmerventils relativ kompliziert und teuer.

Aufgabe der Erfindung ist es, eine Vorrichtung zum Entlüften eines Kraftstoffbehälters eines Kraftfahrzeuges zu schaffen, die einfach aufgebaut ist.

Diese Aufgabe wird durch die kennzeichnenden Merkmale des Anspruchs 1 gelöst.

Durch die Anordnung des Ausgleichsbehälters unterhalb des maximalen Befüllniveaus und durch das Hochführen der Betriebsentlüftungsleitung vom Kraftstoffbehälter aus über das maximale Befüllniveau und den Anschluß eines Endes dieser Betriebsentlüftungsleitung an der tiefstgelegenen Stelle des Bodens des Ausgleichsbehälters, wird erreicht, daß während des Betankungsvorganges eine Befüllung des Ausgleichsbehälters unmöglich ist.

Dehnt sich jedoch der Kraftstoff bei einer Wärmeeinwirkung im Kraftstoffbehälter aus, so kann der Kraftstoff über diese Betriebsentlüftungsleitung in den Ausgleichsbehälter fließen. Eine Entleerung des Ausgleichsbehälters erfolgt im Fahrbetrieb, wenn durch den laufenden Verbrennungsmotor Kraftstoff aus dem Kraftstoffbehälter entnommen wird und dadurch im Kraftstoffbehälter ein Unterdruck entsteht.

Dieser Unterdruck ist abhängig von der zu überbrückenden Förderhöhe bzw. Flüssigkeitssäule zwischen dem Ausgleichsbehälter und dem Wendepunkt der Betriebsentlüftungsleitung oberhalb des maximalen Kraftstoffbehälterniveaus. Aufgrund dieses entstehenden Unterdrucks wird der im Ausgleichsbehälter befindliche Kraftstoff über die Betriebsentlüftungsleitung zurück in den Kraftstoffbehälter gesaugt.

Die dabei für den Ausgleich erforderliche Luft strömt wie bei den bekannten Systemen über einen Atmosphärenanschluß nach, wobei der Atmosphärenanschluß an der Oberseite des Ausgleichsbehälters angebracht ist. Der Atmosphärenanschluß kann unmittelbar zur Umgebung hinführen. In einer anderen Ausführungsform kann die Umgebungsluft über einen Aktivkohlebehälter oder dergleichen angesaugt werden.

Durch die erfindungsgemäße Vorrichtung ist es möglich, die oben genannten Funktionen ohne ein zusätzliches Ventil zu erreichen, so daß der Aufbau der erfindungsgemäßen Vorrichtung einfach und damit relativ preiswert ist.

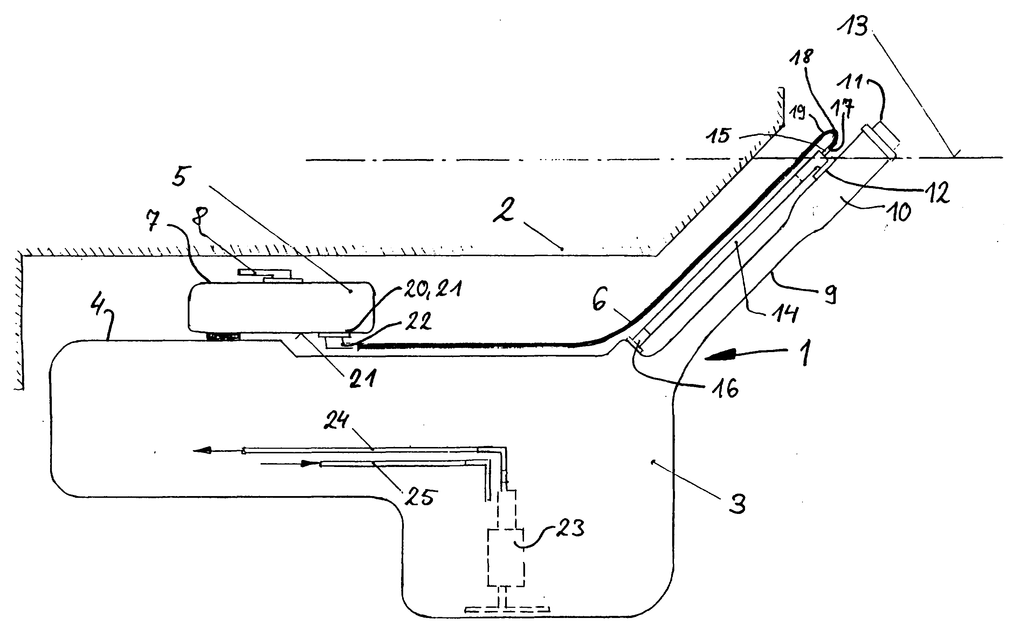

Eine Ausführungsform der Erfindung wird nachstehend anhand der einzigen Zeichnung beschrieben, die eine Prinzipdarstellung der Vorrichtung zeigt.

Die Vorrichtung 1 ist unterhalb einer Karosserie 2 eines Kraftfahrzeuges befestigt. Die Vorrichtung 1 besteht aus einem Kraftstoffbehälter 3, einem an der Oberseite 4 des Kraftstoffbehälters 3 angeordneten Ausgleichsbehälter 5 für den Kraftstoff und aus mindestens einer Betriebs-Entlüftungsleitung 6 und einer Betankungs-Entlüftungsleitung 14. An der Oberseite 7 des Ausgleichsbehälters 5 ist ein Anschluß 8 zur Atmosphäre oder zur Umgebung angeordnet.

Der Kraftstoffbehälter 3 weist ein Einfüllrohr 9 mit einem Einfüllstutzen 10 auf. Der Einfüllstutzen 10 ist durch einen Verschluß oder Tankdeckel 11 in der gezeigten Darstellung verschlossen. Unterhalb des Tankdeckels 11 ist am Einfüllstutzen 10 ein Doppelanschluß 12 mit einer Öffnung zum Einfüllstutzen 10 hin ausgebildet.

Am Doppelanschluß 12 ist das obere Ende der Betankungs-Entlüftungsleitung 14 angeschlossen. Die Betankungs-Entlüftungsleitung 14 führt nach unten zu einem an der Oberseite 4 des Kraftstoffbehälters 3 ausgebildeten Anschluß 16. An das obere Ende 15 des Doppelanschlusses 12 ist die Betriebs-Entlüftungsleitung 6 mit ihrem einen Ende 17 angeschlossen.

Die Betriebs-Entlüftungsleitung 6 geht über das maximale Befüllniveau 13 hinaus und weist einen Wendepunkt 18 auf, der in der vorliegenden Ausführungsform an der höchsten Stelle der Betriebs-Entlüftungsleitung 6 in einer U-förmigen Schleife 19 liegt. Die Betriebs-Entlüftungsleitung 6 verläuft nach dem Wendepunkt 18 nach unten in Richtung der Oberseite 4 des Kraftstoffbehälters 3. An der tiefsten Stelle 20 eines Bodens 21 des Ausgleichsbehälters 5 ist das andere untere Ende 22 der Betriebs-Entlüftungsleitung 6 angeschlossen.

Sind mehrere Betriebs-Entlüftungsleitungen vorgesehen, dann werden diese Betriebs-Entlüftungsleitungen 6 jeweils über das maximale Befüllniveau beispielsweise in der Form einer Schleife hochgeführt, so daß der Wendepunkt dieser Schleife oberhalb des maximalen Befüllniveaus 13 liegt. Das untere Ende der jeweiligen zusätzlichen Betriebs-Entlüftungsleitung ist auf dem gleichen tiefsten Niveau 20 am Boden 21 des Ausgleichsbehälters 5 luftdicht angeschlossen.

Beim Fahrbetrieb fördert eine Kraftstoffpumpe 23 Kraftstoff aus dem Kraftstoffbehälter 3 zu einem nicht abgebildeten Verbrennungsmotor über eine Kraftstoffvorlaufleitung 24. Der zuviel zum Verbrennungsmotor geförderte Kraftstoff fließt über eine Kraftstoffrücklaufleitung 25 in den Kraftstoffbehälter 3 zurück.

## Patentansprüche

1. Vorrichtung zum Entlüften eines Kraftstoffbehälters (3) eines Kraftfahrzeuges, die einen Ausgleichsbehälter (5) und Leitungen (6, 14) aufweist, wobei der Kraftstoffbehälter (3) über eine oder mehrere Betriebs-Entlüftungsleitungen (6) mit dem Ausgleichsbehälter (5) verbunden ist, wobei der Ausgleichsbehälter (5) unterhalb eines maximalen Befüllniveaus (13) des Kraftstoffbehälters (3) angeordnet ist und die Betriebs-Entlüftungsleitung en (6) über das maximale Befüllniveau des Kraftstoffbehälters (3) geführt sind dadurch gekennzeichnet, daß jede vorhandene Betriebs-Entlüftungsleitung (6) mit ihrem einen Ende (12) an eine Betankungs-Entlüftungsleitung (14) angeschlossen ist, die mit der Oberseite (4) des Kraftstoffbehälters (3) verbunden ist und daß ihr anderes, unteres Ende (22) an der tiefsten Stelle (20) eines Bodens (21) des Ausgleichsbehälters (5) angeschlossen ist.

2. Vorrichtung nach Anspruch 1,
dadurch gekennzeichnet, daß ein Befüllen des Ausgleichsbehälters (5) durch eine Ausdehnung des Kraftstoffes im Kraftstoffbehälter (3) bei Wärmeeinwirkung über die vorhandene Anzahl der Betriebs-Entlüftungsleitungen (6) erfolgt.

3. Vorrichtung nach Anspruch 2,
dadurch gekennzeichnet, daß der Ausgleichsbehälter (5) über die Betankungs-Entlüftungsleitung (14) und eine daran angeschlossene Betriebs-Entlüftungsleitung (6) bei Ausdehnung des Kraftstoffes befüllbar ist.

4. Vorrichtung nach einem oder mehreren der vorhergehenden Ansprüche,
dadurch gekennzeichnet, daß eine Entleerung des Ausgleichsbehälters (5) aufgrund eines Unterdruckes im Kraftstoffbehälter (3) erfolgt, der bei der Kraftstoffentnahme über die Kraftstoffpumpe (23) aus dem Kraftstoffbehälter (3) während des Betriebes eines Verbrennungsmotors aufgebaut wird.

5. Vorrichtung nach einem oder mehreren der vorhergehenden Ansprüche,
dadurch gekennzeichnet, daß ein Anschluß (8) mittelbar oder unmittelbar zur Atmosphäre an der Oberseite (7) des Ausgleichsbehälters (5) angeordnet ist.

## Claims

1. An arrangement for the ventilation of a fuel tank (3) of a motor vehicle, which has an expansion tank (5) and pipes (6, 14), whereby the fuel tank (3) is connected to the expansion tank (5) via one or more operating ventilation pipes (6) whereby the expansion tank (5) is arranged below the maximum filling level (13) of the fuel tank (3) and the operating ventilation pipes (6) are taken above the maximum filling level of the fuel tank (3), characterised in that each operating ventilation pipe (6) present is connected at its one end (12) to a filling ventilation pipe (14), which is connected to the upper side (4) of the fuel tank (3) and that its other end (22) is connected to the lowest point (20) of a bottom (21) of the expansion tank (5).

2. An arrangement according to Claim 1,
characterised in that filling of the expansion tank (5) is effected by an expansion of the fuel in the fuel tank (3) due to the effect of heating via the number of operating ventilation pipes (6) present.

3. An arrangement according to Claim 2,
characterised in that the expansion tank (5) can be filled on expansion of the fuel via the fuel tank ventilation pipe (14) and an operating ventilation pipe (6) connected to it.

4. An arrangement according to one or more of the foregoing Claims,
characterised in that an emptying of the expansion tank (5) occurs due to a vacuum in the fuel tank (3), which is built up by the removal of fuel by the fuel pump (23) from the fuel tank (3) during operation of an internal combustion engine.

5. An arrangement according to one or more of the foregoing Claims,
characterised in that a connection (8) is arranged directly or indirectly to the atmosphere on the upper side (7) of the expansion tank (5).

## Revendications

1. Dispositif de ventilation d'un réservoir de carburant (3) d'un véhicule automobile comportant un réservoir de compensation (5) et des conduites (6, 14), le réservoir de carburant (3) étant relié au réservoir de compensation (5) par une ou plusieurs conduites de ventilation de fonctionnement (6), le réservoir de compensation (5) se trouvant en dessous d'un niveau maximum de remplissage (13) du réservoir de carburant (3) et les conduites de ventilation de fonctionnement (6) passant au-dessus du niveau de remplissage maximum du réservoir de carburant (3),
caractérisé en ce que
- chaque conduite de ventilation de fonctionnement (6) est raccordée par une extrémité (12) à une conduite de ventilation de réservoir (14) reliée au coté supérieur (4) du réservoir de carburant (3), et
- son autre extrémité inférieure (22) est raccordée au point le plus bas (20) d'un fond (21) du réservoir de compensation (5).

2. Dispositif selon la revendication 1,
caractérisé en ce que
le remplissage du réservoir de compensation (5) par une dilatation du carburant dans le réservoir (3) sous l'effet de la chaleur, se fait par le nombre existant de conduites de ventilation de fonctionnement (6).

3. Dispositif selon la revendication 2,
caractérisé en ce que
le réservoir de compensation (5) se remplit par la conduite de ventilation de remplissage (14) et parune conduite de ventilation de fonctionnement (6) raccordée à celle-ci, en cas de dilatation du carburant.

4. Dispositif selon l'une ou plusieurs des revendications précédentes,
caractérisé en ce que
le réservoir de compensation (5) se vide sous l'effet de la dépression régnant dans le réservoir de carburant (3) et qui, lors du prélèvement de carburant par la pompe (23) dans le réservoir (3), s'établit pendant le fonctionnement du moteur à combustion interne.

5. Dispositif selon l'une ou plusieurs des revendications précédentes,
caractérisé par
un branchement (8) prévu directement ou indirectement avecl'atmosphère au niveau du côté supérieur (7) du réservoir de compensation (5).
